# EUROPÄISCHE PATENTSCHRIFT

(11) **EP 2 042 353 B1**
(45) Veröffentlichungstag und Bekanntmachung des Hinweises auf die Patenterteilung: **08.02.2012**
(21) Anmeldenummer: 08400035.5
(22) Anmeldetag: 26.07.2008
(51) Int. Cl.: B60D 1/54

(54) **Anhängekupplung**
Trailer coupling
Attelage de remorque

(30) Priorität: 01.09.2007 DE 102007041582
(43) Veröffentlichungstag der Anmeldung: 01.04.2009
(73) Patentinhaber: WESTFALIA - Automotive GmbH, 33378 Rheda-Wiedenbrück (DE)
(72) Erfinder: Hermbusch, Gerhard, 33378 Rheda-Wiedenbrück (DE)
(74) Vertreter: Bregenzer, Michael

(56) Entgegenhaltungen:
- EP-A- 0 677 406
- EP-A- 1 321 317
- DE-A1- 10 032 002
- DE-B3- 10 252 722
- US-A- 2 978 260
- US-B1- 6 837 511

## Beschreibung

Die Erfindung betrifft eine Anhängekupplung gemäß dem Oberbegriff des Anspruchs 1.

Eine derartige Anhängekupplung mit einer Verriegelungsanordnung zur Verriegelung des Kupplungsarms an dem Halter, die eine in dem Steckende beweglich angeordnete verdrängereinrichtung zum Verdrängen mindestens eines Spannelementes vor einen Außenumfang des Steckendes in eine Spannstellung aufweist, bei der das mindestens eine Spannelement in eine korrespondierende Ausnehmungsanordnung an der Steckaufnahme eingreift und einen Kupplungsarm-Anschlag gegen einen Halter-Anschlag gespannt ist, geht beispielsweise aus EP 1 321 317 A1 hervor. Die Verriegelungsanordnung enthält einen als verdrängereinrichtung wirkenden Sperrbolzen, der Kugeln nach radial außen vor das Steckende des Kupplungsarmes verdrängt. Dann greifen sie in eine Kugelsitzrinne ein und spannen kupplungsarm-Anschläge gegen Halter-Anschläge des Halters. Die Kupplungsarm-Anschläge sind seitlich vor das Steckende des Kupplungsarms vorstehende Keilschrägenvorsprünge, in die korrespondierende Keilausnehmungen, die Halter-Anschläge bilden, eingreifen. Die Halter-Anschläge sind an einem unteren Abschnitt des als Hülse ausgestalteten fahrzeugseitig befestigten Halters angeordnet. Die von dem Kupplungsarm auf die Steckaufnahme übertragbaren Kräfte werden unter anderem durch die Ausgestaltung von Kupplungsarm-Anschlag und Halter-Anschlag definiert.

Die Möglichkeiten zur Kraftübertragung vom Kupplungsarm auf den Halter und umgekehrt sind jedoch eingeschränkt, insbesondere wird das Steckende, beispielsweise im Bereich der Verriegelungselemente und der Keilvorsprünge, stark belastet.

EP 0 677 406 A1 betrifft eine abnehmbare Anhängekupplung, bei der eine mit einer Kupplungskugel versehene Kugelstange in ein fahrzeugseitiges Halte- bzw, Aufnahmeteil einsteckbar ist. Die Arretierung erfolgt durch eine Einführung und ein Verdrehen um ca. 90° in der Öffnung des Aufnahmeteils, wobei ein Haltestift am Aufnahmeteil in einer Winkelnut am Schaft der Kugelstange eingreift. Ist die Kugelstange in ihre Arbeitsposition verdreht, rastet ein an einem plattenartigen Vorsprung der Kugelstange angeordneter verriegelungsbolzen in eine außermittige Ausnehmung am Aufnahmeteil ein. Die Nut ist an ihrem Ende konisch verjüngt. Die außermittige Ausnehmung im Zusammenwirken mit dem verriegelungsbolzen bewirkt einen Nachstelleffekt.

Es ist daher die Aufgabe der vorliegenden Erfindung, eine Anhängekupplung mit hoher mechanischer Belastbarkeit bereitzustellen.

Zur Lösung der Aufgabe ist eine Anhängekupplung gemäß der technischen Lehre des Anspruchs 1 vorgesehen.

Ein Grundgedanke der Erfindung ist es, durch radial abstehende Stützflansch am Kupplungsarm und/oder an der Steckaufnahme eine besonders hohe Kraftübertragung vom einen auf das andere Bauteil und umgekehrt möglich zu machen. Die Plansche stehen kragenartig vor das jeweilige Bauteil (Kupplungsarm oder Halter) vor und stellen eine große, wirksame Stützfläche bereit. Dadurch wird die Belastung auf das steckende verringert, beispielsweise im Bereich der Verriegelungselemente.

Zur Verdrehsicherung des Kupplungsarmes an dem Halter sind verschiedenartige Maßnahmen denkbar.

So können beispielsweise Führungsnuten und Ausnehmungen am Steckvorsprung und der Steckaufnahme eine verdrehsicherung bereitstellen.

Erfindungsgemäß sind jedoch am Kupplungsarm-Anschlag und dem Halter-Anschlag, d.h. an einem jeweiligen Stützflansch, Verdrehsicherungsformschlusskonturen vorgesehen, die beim Stecken des Kupplungsarmes an den Halter ineinander greifen. Beispielsweise sind Verdrehsicherungsaufnahmen und Verdrehsicherungsvorsprünge jeweils an den beiden Anschlägen vorhanden, wobei es möglich ist, dass an einem Anschlag sowohl Vorsprünge als auch Aufnahmen vorhanden sind. Der Drehsicherungsvorsprung ist vorteilhaft zylindrisch oder kugelig, wobei die korrespondierende Drehsicherungsaufnahme dann hohlzylindrisch oder kalottenförmig ist. Diese runden oder gekrümmten Oberflächen des Vorsprungs und der Aufnahme erleichtern im Gegensatz zu ebenfalls möglichen polygonalen Formschlusskonturen das Ineinandereingreifen. So kann beispielsweise der Kupplungsarm noch etwas gedreht werden, damit die Drehsicherungsformschlüsse ineinander greifen. Kugelige Formschlusskonturen werden zweckmäßigerweise durch in den jeweiligen Stützflansch eingepresste Kugeln bereitgestellt. Zylindrische Formschlusskonturen oder im Wesentlichen zylindrische Formschlusskonturen verlaufen vorzugsweise radial von der Steckaufnahme beziehungsweise dem steckende weg.

Die Formschlusskonturen haben vorzugsweise Schrägflächen, z.B. konische, runde, kugelige Flächen oder dergleichen, so dass die Formschlusskonturen leicht ineinander greifen und/oder ein Nachstelleffekt beim Spannen des Kupplungsarms an den Halter auftritt.

Plan- oder Stützflächen der Stützflansche, an denen die Verdrehsicherungs-Formschlusskonturen angeordnet sind, z.B. vor die sie vorstehen, haben bei an den Halter gespanntem Kupplungsarm einen Abstand voneinander, während die Formschlusskonturen ineinander greifen. Wenn bei der Anhängekupplung ein Verschleiß auftritt, z.B. wenn die Formschlusskonturen sich sozusagen ineinander einarbeiten, ermöglichen die Schrägflächen, dass die Formschlusskonturen nach wie vor mit geringem oder keinem Spiel ineinander greifen und der Kupplungsarms spielfrei oder mit geringem Spiel am Halter gehalten wird. Selbst nach einem hohen Verschleiß ist Betriebssicherheit gegeben, denn dann liegen die Planflächen der Stützflansche flächig aufeinander und die Formschlusskonturen stellen eine Verdrehsicherung mit keinem oder allenfalls geringem Spiel bereit.

Somit sind mehrere Situationen einer Abstützung bei erfindungsgemäßen Stützflanschen möglich:
- einander gegenüberliegende Plan- oder Stützflächen der Stützflansche haben einen Abstand und an den Plan-oder Stützflächen angeordnete Verdrehsicherungs-Formschlusskonturen greifen ineinander ein zumindest bei noch unverschlissener Anhängekupplung,
- flächige Planlage und Eingriff von an den Flächen angeordneten Verdrehsicherungs-Formschlusskonturen.

Es versteht sich, dass die vorgenannten Möglichkeiten auch bei nur einem Stützflansch und einer diesem zugeordneten, jedoch nicht an einem Stützflansch sondern anderweitig am Halter oder Kupplungsarm vorgesehenen Stützfläche oder -kontur realisierbar sind.

Die Stützflansche des Kupplungsarmsund/oder der Steckaufnahme sind zweckmäßigerweise plattenartig.

Die Stützflansche weisen Basis- oder Tragflächen für Formschlusskonturen und/oder Kontaktflächen für einen direkten, vorzugsweise flächig planen Kontakt der Stützflansche aneinander auf. Die Tragflächen oder Kontaktflächen erstrecken sich relativ weit von einer Mittelachse des Kupplungsarms beziehungsweise der Steckaufnahme weg quer, z.B. abschnittsweise rechtwinkelig und/oder schräg, zu der Mittelachse, sodass Kräfte und Drehmomente beim Anhängebetrieb der Anhängekupplung mit großem Abstand zu dieser Mittenachse zwischen Kupplungsarm und Halter aufgenommen werden können.

Im Rahmen der Erfindung ist es denkbar, dass nur der fahrzeugseitige Halter oder nur der Kupplungsarm mit Stützflanschen ausgestattet sind, während das jeweils andere Bauteil (Kupplungsarm oder Halter) eine alternative Stützfläche für den jeweiligen Stützflansch bereitstellt. So ist es beispielsweise denkbar, dass eine Unterseite eines Querträgers, der die Steckaufnahme bereitstellt (z.B. durch ein in den Querträger eingebautes Rohrstück), an seiner Unterseite eine stützfläche für den am Kupplungsarm vorgesehenen Stützflansch bereitstellt. Auf der anderen Seite kann der Kupplungsarm beispielsweise stufig ausgestaltet sein, wobei eine Stufe unterhalb des Steckendes eine Stützfläche bereitstellt, die mit einem fahrzeugseitigen, am Halter angeordneten Halter-Stützflansch zusammenwirkt. Ferner können am Kupplungsarm oder dem Halter auch Vorsprünge, z.B. Vorsprungsarme, vorgesehen sein, die am Stützflansch des jeweils anderen Bauteils, z.B. des Halters oder des Kupplungsarms, anliegen.

Besonders bevorzugt ist es jedoch, wenn sowohl der Halter als auch der Kupplungsarm jeweils einen Stützflansch aufweisen.

Es ist auch möglich, dass Plan- oder Stützflächen der Stützflansche zwar einen Abstand voneinander haben und an den Plan-oder Stützflächen vorteilhaft vorgesehene Formschlusskonturen ineinander greifen.

Die Stützflansche stehen kragenartig vor das jeweilige Bauteil vor, beispielsweise eine Einsteckhülse des Halters oder des Kupplungsarms. Die stützflansche können beispielsweise an den Kupplungsarm oder den Halter angeschweißte Flanschplatten sein. Bei dem Kupplungsarm ist es vorteilhaft, wenn er ein durchgehendes Schmiedeteil oder Gussteil ist, das zusätzlich mit dem Stützflansch versehen wird.

Die erfindungsgemäße Anhängekupplung baut besonders kompakt. Eine Länge der Steckaufnahme ist beispielsweise vorteilhaft kürzer als ein Durchmesser oder eine Seitenlänge des Halter-stütsflansches. Ein halber Durchmesser des Halter-stützflansches kann etwa dem 0, 7- bis 1, 5-fachen einer Länge der Steckaufnahme entsprechen, wobei auch kleinere oder größere Verhältnisse möglich sind. Jedenfalls baut die Steckaufnahme im vergleich zu dem Stützflansch sehr kompakt. Ein Großteil der beim Fahrbetrieb der Anhängekupplung auftretenden Kräfte wird auf den Halter-Stützflansch übertragen. Eine besonders bevorzugte Ausführungsform der Erfindung sieht vor, dass etwa der halber Durchmesser des Halter-Stützflansches etwa der Länge der Steckaufnahme entspricht.

Der auf Seiten des Kraftfahrzeugs erforderliche Bauraum zum Einbau der Anhängekupplung ist somit sehr klein.

Auch der Kupplungsarm baut kompakt. Eine Länge des Steckendes entspricht beispielsweise einem etwa 0,5- bis 1,8-fachen, vorzugsweise einem etwa 0,7- bis 1,5-fachen Durchmesser des Kupplungsarm-Stützflansches.

"Durchmesser" ist bei den vorgenannten Längenangaben so zu verstehen, dass dies beispielsweise der Durchmesser eines kreisrunden Stützflansches ist oder aber auch eine maximale Seitenlänge des jeweiligen Stützflansches in einer quer zur Einsteck-Längsrichtung verlaufenden Querrichtung. Dies ist beispielsweise bei polygonalen, z.B. quadratischen, sechseckigen oder achteckigen, Stützflanschen, der Fall.

Auch die Spannanordnung am Kupplungsarm und der kupplungsarmseitige Stützflansch können sehr eng beieinander liegen. So ist beispielsweise ein Abstand zwischen dem mindestens einen Spannelement und dem Kupplungsarm-Stützflansch gleich oder kleiner als ein halber Durchmesser des Kupplungsarm-Stützflansches. Durch diese Geometrie kommt auch zum Ausdruck, dass ein Großteil der beim Fahrbetrieb auftretenden Kräfte am Stützflansch abgefangen wird.

Ein Steckende und ein im montierten Zustand nach unten vorstehender Kupplungsarmabschnitt des Kupplungsarms erstrecken sich von einander entgegengesetzten Seiten des Kupplungsarm-Stützflansches weg entlang der Einsteck-Längsrichtung. Der im montierten zustand untere Kupplungsarmabschnitt des Kupplungsarmes steht dabei vorteilhaft nur wenig nach unten unterhalb vor den Stützflansch vor. Der nach unten vorstehende Kupplungsarmabschnitt und das Steckende sind vorzugsweise etwa gleich lang. Auch ein Verhältnis von etwa 0,5 bis 1,6, vorteilhaft 0,7 bis 1, 3, der Länge des Steckendes zu dem Kupplungsarmabschnitt ist vorteilhaft.

Der Kupplungsarm ist in an sich bekannter weise zweckmäßigerweise gekrümmt. Eine Krümmung zu einem quer zu der Einsteck-Längsrichtung verlaufenden Halsabschnitt des Kupplungsarms beginnt vorteilhaft unmittelbar an dem Kupplungsarm-Stützflansch.

Wie oben bereits angedeutet, können die Außenkonturen eines oder beider Stützflansche ganz oder abschnittsweise kreisförmig und/oder elliptisch und/oder polygonal sein.

Ferner ist es möglich, dass einer oder beide Stützflansche segmentiert sind. So können beispielsweise sternförmige Flansche vorgesehen sein.

Eine Abstützfläche eines erfindungsgemäßen Stützflansches zur Abstützung am jeweils andern Stützflansch oder einer sonstigen Stützfläche ist zweckmäßigerweise eben. Es sind aber auch zumindest abschnittsweise gekrümmte und/oder polygonale Abstützflächen möglich.

Zum Abfangen möglichst großer Drehkräfte bei der erfindungsgemäßen Anhängekupplung ist es vorteilhaft, wenn der jeweilige Drehsicherungsvorsprung oder die korrespondierende Drehsicherungsaufnahme an einem vom steckende beziehungsweise der Steckaufnahme entfernten äußeren Randbereich des jeweiligen Stützflansches angeordnet ist. Dadurch ist es möglich, dass die Formschlusskonturen, die als Verdrehsicherung wirken, eine geringe Eingreifhöhe aufweisen.

Es ist auch möglich, dass an einem Außenumfang oder einer Außenumfangskontur der Stützflansche Drehsicherungsvorsprünge und -aufnahmen vorgesehen sind.

Die Verriegelungsanordnung einer erfindungsgemäßen Anhängekupplung bildet vorteilhaft eine Spanneinrichtung zum Spannen einer Abstützfläche eines erfindungsgemäßen Stützflansches in Richtung eines anderen Stützflansches oder einer sonstigen Stützfläche am jeweils anderen Bauteil (Kupplungsarm oder Halter) oder ist zu einem derartigen Spannen ausgestaltet.

Die Verriegelungsanordnung weist vorteilhaft eine beweglich gelagerte Verdrängereinrichtung zum Verdrängen des mindestens einen Spannelementes in die Spannstellung auf. Die Verdrängereinrichtung umfasst z.B. einen Verriegelungsbolzen, einen Verriegelungsring oder dergleichen. Der Verriegelungsbolzen oder der Verriegelungsring können am Kupplungsarm, insbesondere dessen Innenraum, oder am Halter beweglich gelagert sein. Die Verdrängereinrichtung weist z.B. mindestens eine Spannschräge auf.

Es ist auch möglich, dass das Spannelement, z.B. ein Spannbolzen, durch unmittelbare manuelle oder motorische Betätigung, d.h. ohne eine Verdrängereinrichtung, in die Ausnehmungsanordnung hinein und/oder aus der Ausnehmungsanordnung heraus verstellbar ist.

Das erfindungsgemäße Konzept von Stützflanschen am Halter und/oder am Kupplungsarm ist sowohl bei einer Verriegelungsanordnung, deren bewegliche Teile im Wesentlichen am Halter angeordnet sind, als auch bei einer Verriegelungsanordnung, bei der die Verriegelungselemente im Wesentlichen an dem Kupplungsarm oder im Kupplungsarm angeordnet sind einsetzbar.

Eine Verriegelungsvariante sieht vor, dass die Verdrängereinrichtung der Verriegelungsanordnung und das mindestens eine Spannelement beweglich in dem Steckende angeordnet sind, wobei das mindestens eine Spannelement in der Spannstellung vor einen Außenumfang des Steckendes vorsteht und in die Ausnehmungsanordnung eingreift, die in diesem Fall an der Steckaufnahme angeordnet ist. Auch die Verdrängereinrichtung, insbesondere der Verriegelungsbolzen, sind vorzugsweise am oder im Kupplungsarm beweglich gelagert.

Ein alternatives Konzept sieht vor, dass das Spannelement, vorzugsweise auch die Verdrängereinrichtung, am Halter beweglich angeordnet ist und das Spannelement in der Spannstellung in die in diesem Fall am Kupplungsarm angeordnet Ausnehmungsanordnung eingreift. Diese Ausnehmungsanordnung umfasst beispielsweise eine Ringnut am Steckende des Kupplungsarms, Kugelkalotten am Steckende des Kupplungsarms oder dergleichen.

Eine bevorzugte Ausführungsform der Erfindung betrifft eine Anhängekupplung für ein Kraftfahrzeug mit einem Kupplungsarm, der an seinem freien Ende ein Kopfstück zum lösbaren Befestigen eines Anhängers trägt und mit einem Steckende in einer Einsteck-Längsrichtung in eine Steckaufnahme eines an dem Kraftfahrzeug anordenbaren oder angeordneten Halters einsteckbar ist, und mit einer Verriegelungsanordnung zur Verriegelung des Kupplungsarms an dem Halter, mit einer in dem Steckende beweglich angeordneten Verdrängereinrichtung zum Verdrängen mindestens eines Spannelementes vor einen Außenumfang des Steckendes in eine Spannstellung, bei der das mindestens eine Spannelement gegen eine korrespondierende Ausnehmungsanordnung an der Steckaufnahme eingreift und ein Kupplungsarm-Anschlag gegen einen Halter-Anschlag gespannt ist. Bei dieser bevorzugten Anhängekupplung ist vorgesehen, dass der Kupplungsarm-Anschlag an einem Kupplungsarm-Stützflansch und/oder der Halter-Anschlag an einem Halter-Stützflansch vorgesehen sind.

Die Verdrängereinrichtung zum Betätigen der Spannelemente, z.B. Kugeln, enthält vorteilhaft einen in einem Führungskanal des Steckendes längsverstellbar geführten, vorteilhaft in die Spannstellung federbelasteten Verriegelungsbolzen.

Zur Erhöhung des Bedienkomforts der erfindungsgemäßen Anhängekupplung trägt die nachfolgende Maßnahme bei: Sie hat vorteilhaft eine Sicherungseinrichtung zum Sichern der Verdrängereinrichtung, z.B. des Verriegelungsbolzens, der Verriegelungsanordnung in einer zum Entnehmen des Kupplungsarms aus dem Halter vorgesehenen Freigabestellung gegen eine Bewegung in die Spannstellung. Die Sicherungseinrichtung umfasst ein in einem Bewegungskanal des Steckendes beweglich angeordnetes Übertragerelement, das auf ein in einem Verdränger-Bewegungskanal der Verdrängereinrichtung beweglich angeordnetes und durch eine Feder belastetes Sperrformstück wirkt. Beim Einstecken des Steckendes in die Halterung wird das Übertragerelement durch eine Innenkontur der Steckaufnahme, beispielsweise eine lineare oder schräge Betätigungsfläche, z.B. konische Innenkontur der Steckaufnahme, betätigt, wobei es in das Steckende hineinverdrängt wird. Dabei betätigt das Übertragerelement, beispielsweise eine Kugel, das Sperrformstück in den Verdränger-Bewegungskanal hinein. Dann steht das Formstück nicht oder weniger vor die Außenkontur der Verdrängereinrichtung vor, sodass es in Richtung der Spannstellung verlagert werden kann. Die erfindungsgemäß kompakt bauende Anhängekupplung ermöglicht es, dass der Steckende-Bewegungskanal für das Übertragerelement unmittelbar neben dem Kupplungsarm-Stützflansch verläuft.

Die Verriegelungsanordnung einer erfindungsgemäßen Anhängekupplung kann beispielsweise manuell betätigbar sein. Aber auch ein motorisches Betätigungskonzept, insbesondere zum Verspannen der jeweiligen Verriegelungsanordnung, ist vorteilhaft. Bei einer motorischen Verspannung sind hohe Spannkräfte erzielbar.

Bei einer halterseitigen Verriegelungsanordnung ist zweckmäßigerweise vorgesehen, dass am Halter mindestens ein Spannelement in einem Führungskanal schiebe- und/oder drehbeweglich gelagert ist und von der ebenfalls bezüglich des Halter beweglich gelagerten Verdrängeranordnung in Richtung des Kupplungsarms bzw. der Ausnehmungsanordnung am Kupplungsarm betätigbar ist. Die Führungskanäle sind beispielsweise an einer Aufnahmehülse des Halters angeordnet und verlaufen nach radial innen zur Steckaufnahme.

Nachfolgend werden Ausführungsbeispiele der Erfindung anhand der Zeichnung erläutert. Es zeigen:
- Figur 1: eine perspektivische Schrägansicht einer erfin- dungsgemäßen Anhängekupplung von oben, wobei ein Kupplungsarm von einem Halter entfernt ist,
- Figur 2: die Anhängekupplung gemäß Figur 1 in perspektivi- scher Schrägansicht von unten,
- Figur 3: die Anhängekupplung etwa entsprechend der Ansicht gemäß Figur 1, jedoch im montierten Zustand,
- Figur 4: einen Längsschnitt der Anhängekupplung etwa ent- lang einer Linie A-A in Figur 3,
- Figur 5: eine Querschnittsansicht der Anhängekupplung ge- mäß Figur 3, etwa geschnitten entlang einer Linie B-B.
- Fig. 6a, 6b: zeigen ein zweites Ausführungsbeispiel einer er- findungsgemäßen Anhängekupplung mit einer im We- sentlichen am Halter angeordneten Verriegelungs- einrichtung, im voneinander entfernten und inein- ander gesteckten Zustand,
- Figur 7: eine teilweise Schnittdarstellung einer der Ver- riegelungsanordnung der Anhängekupplung gemäß Fi- gur 6b etwa entlang einer Schnittlinie C-C in Fi- gur 6b, und
- Figur 8: eine alternative Verdrängereinrichtung für die Verriegelungsanordnung gemäß Figur 7.

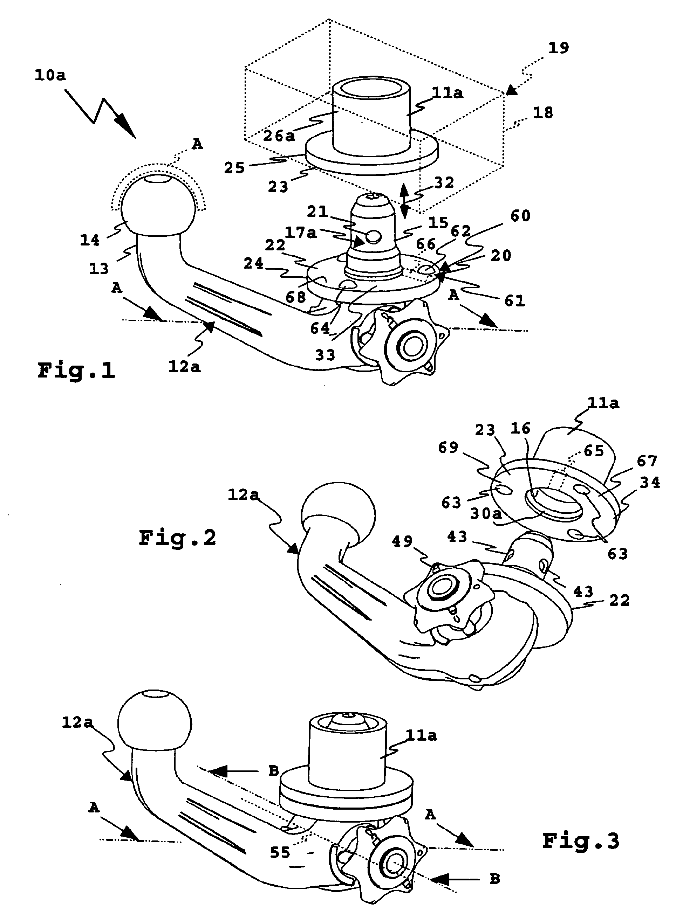

Ein Kupplungsarm 12a einer Anhängekupplung 10a ist mit einem Steckende 15 in eine Steckaufnahme 16 eines Halters 11a einsteckbar. Der Kupplungsarm 12a trägt an seinem freien Ende 13 ein Kopfstück 14, z.B. einen Kugelkopf, zum Ankuppeln eines schematisch dargestellten Anhängers A. Der Halter 11a ist in der Art einer Einsteckhülse ausgestaltet. Der Halter 11a ist an einer Karosseriestruktur eines Kraftfahrzeugs 19 befestigt, beispielsweise an einen schematisch und verkürzt dargestellten Fahrzeugquerträger 18 angeschweißt, angeschraubt oder dergleichen. Der Fahrzeugquerträger 18 ist z.B. mit nicht dargestellten Seitenträgern an einer Karosserie des Kraftfahrzeugs 19 befestigt. Der Kupplungsarm 12a ragt in seinem in Figur 3 dargestellten montierten Zustand nach hinten vor das Kraftfahrzeug 19 vor, z.B. unter einem Stoßfänger 55 hindurch vor diesen vor.

Wenn das Steckende 15, im Ausführungsbeispiel von unten, in die Steckaufnahme 16 eingesteckt ist (ein schräges Einstecken oder ein Einstecken in Fahrzeuglängsrichtung wäre bei einer erfindungsgemäßen Anhängekupplung auch denkbar), ist der Kupplungsarm 12a mit einer Verriegelungsanordnung 17a an dem Halter 11a verriegelbar.

Das Steckende 15, das z.B. eine turmartige Struktur hat, hat kreiszylindrische und/oder konische Abschnitte in seinem oberen Bereich. Es ist z.B. als ein Drehteil ausgestaltet. Es versteht sich, dass mögliche Ausführungsformen der Erfindung nicht auf kreisrunde Außenkonturen eines Steckendes beschränkt sind, sondern dass auch polygone Außenkonturen denkbar sind.

Im in die Steckaufnahme 16 gesteckten Zustand des Steckendes 15 spannen Spannelemente 21 der Verriegelungsanordnung 17a einen Kupplungsarm-Anschlag 22 an einem Fußbereich 20 des Steckendes 15 gegen den Halter-Anschlag 23 des Halters 11a.

Der Kupplungsarm-Anschlag 22 ist an einem Kupplungsarm-Stützflansch 24 vorgesehen, der Halter-Anschlag 23 an einem Halter-Stützflansch 25. Die Stützflansche 24, 25 sind kreisförmige Platten. Es versteht sich, dass auch polygone Außenkonturen denkbar sind.

Beispielsweise ist der Halter-Stützflansch 25 an einem vorderen, freien Ende einer Aufnahmehülse 26a vorgesehen, sodass der Halter 11a insgesamt eine hutartige Gestalt aufweist. Die Aufnahmehülse 26a, deren Innenraum die Steckaufnahme 16 bildet, ist beispielsweise in den Querträger 18 eingeschweißt oder eingeschraubt.

Die Stützflansche 24, 25 können in der beispielsweise in Figur 3 dargestellten montierten Stellung der Anhängekupplung 10a im Wesentlichen flächig aneinander liegen. Es ist auch möglich, dass Formschlusskonturen 60 an den einander gegenüberliegenden Stützflächen 68, 69 der Stützflansche 24, 25 ineinander eingreifen und einen Abstand zwischen den Stützflächen bewirken.

Durch die Stützflansche 24, 25 ist eine optimale Abstützung des Kupplungsarms 12a am Halter 11a gegeben, beispielsweise beim Beschleunigen oder Abbremsen, bei Kurvenfahrt oder dergleichen.

Die ringartige Gestalt der Stützflansche 24, 25 überträgt die dabei auftretenden Kräfte vorzugsweise in jede Richtung.

Die Spannelemente 21 umfassen Formstücke, z.B. Kugeln, die durch eine Verdrängereinrichtung 28a im Innern des Steckendes 15 vor einen Außenumfang 29 verdrängbar sind, so dass sie in ihrer Spannstellung in eine Ausnehmungsanordnung 30a, mit z.B. einer Ringnut 31 oder einer sonstige Ausnehmung, beispielsweise mindestens einer Kugelkalotte, des Halters 11a eingreifen und die Anschläge 22, 23 in Einsteck-Längsrichtung 32 gegeneinander spannen. Die Ringnut 31 ist an einem Innenumfang eines Ringstücks 45 angeordnet, das im Innenraum der Aufnahmehülse 26a angeordnet, z.B. eingepresst ist. Das Ringstück 45 stützt sich an einem Vorsprung 27 der Aufnahmehülse 26a ab.

Die Spannelemente 21 sind an einem vorderen Abschnitt des Steckendes 15 angeordnet, sodass zwischen den Spannelementen 21 und den Anschlägen 22, 23 ein Längsabstand 75 vorhanden ist. Der Längsabstand 75 ist kurz und entspricht etwa dem Radius des Kupplungsarm-Stützflanschs 24.

Unterhalb des Kupplungsarm-Stützflanschs 24 erstreckt sich ein kurzer Kupplungsarmabschnitt 76, dessen Länge etwa dem Durchmesser des Kupplungsarm-Stützflanschs 24 entspricht.

Die Verdrängereinrichtung 28a umfasst einen Verriegelungsbolzen 35 mit einem Stangenabschnitt 36, an dessen vorderem Ende ein Kopf 37 angeordnet ist. Der Kopf 37 ist abschnittsweise konisch, sodass Betätigungsflächen 38 oder eine einzige Betätigungsfläche 38 gebildet sind bzw. ist. Der Verriegelungsbolzen 35 ist in einem Führungskanal, z.B. einer Führungsbohrung 39, im Innern des Steckendes 15 längsverstellbar. Die Führungsbohrung 39 ist eine z.B. stufige und/oder abschnittsweise konische Durchgangsbohrung, die durch das Steckende 15 hindurch verläuft. Die Enden der Führungsbohrung 39 sind durch Verschlüsse 52, 53 verschlossen.

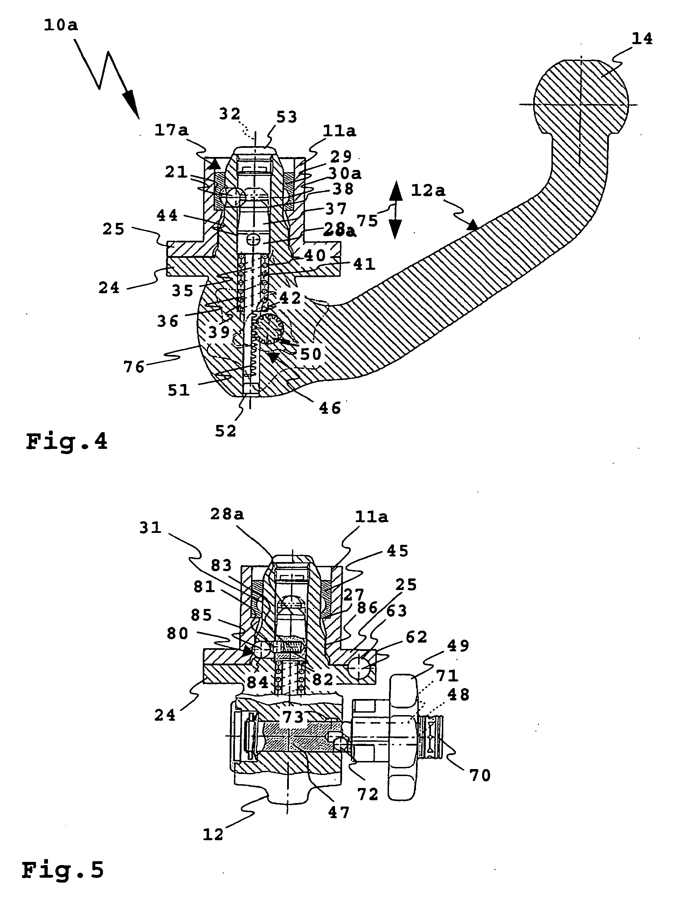

Die Verdrängereinrichtung 28a ist durch eine Federanordnung 40 mit einer Schraubenfeder 41 in eine Spann- oder Verriegelungsstellung (gestrichelt dargestellte obere Position des Kopfes 37 in Figur 4) vorgespannt. Die Schraubenfeder 41 stützt sich einerseits an einem Vorsprung 42 in der Führungsbohrung 39 und andererseits am Kopf 37 ab, sodass die Federanordnung 40 den Kopf 37 in Richtung der Verriegelungsstellung, in der Zeichnung nach oben, verlagert. Dabei drücken die Betätigungsflächen 38 die Kugeln bzw. Spannelemente 21, die in Kanälen oder Bohrungen 43 geführt sind, nach radial außen, sodass die Spannelemente 21 in die Ringnut 31 eingreifen und das Steckende 15 in der Steckaufnahme 16 verspannen.

Die Ringnut 31 hat vorteilhaft einen mittleren, flach verlaufenden Abschnitt, an den sich zur Spannstellung hin, in der Zeichnung nach unten, eine Einlaufschräge anschließt. Wenn der Verriegelungsbolzen 35 die Kugel-Spannelemente 21 nach radial außen verdrängt, werden die Spannelemente 21 vorzugsweise gegen eine untere gerundete und/oder schräge Seitenwand der Ringnut 31 gespannt.

Der Verriegelungsbolzen 35 kann mit einem Getriebe 46 entriegelt werden. Eine Drehwelle 47 des Getriebes 46 ist in Querrichtung 48 des Kupplungsarms 12a an diesem drehbar gelagert. Die Drehwelle 47 ist mit einem Drehknebel 49 betätigbar. Ein Zahnrad 50 an der Drehwelle 47 kämmt mit einem Zahnabschnitt 51 an dem Stangenabschnitt 36, sodass durch Drehbetätigung des Drehknebels 49 der Verriegelungsbolzen 35 längsverstellbar ist. Dabei muss die in Richtung der Verriegelungsstellung wirkende Kraft der Federanordnung 40 überwunden werden.

Wenn die Spannelemente 21 in ihrer Spannstellung sind, ziehen sie den Kupplungsarm-Stützflansch 24 in Einsteck-Längsrichtung 32 sozusagen gegen den Halter-Stützflansch 25.

Dann liegen die Stützflansche 24, 25 z.B. flächig aneinander, um sowohl in Fahrzeug-Querrichtung als auch in Längsrichtung eine optimale Abstützung bereitzustellen.

Zudem greifen die Formschlusskonturen 60 an der dem Kupplungsarm-Stützflansch 24 zugewandten Unterseite des Halter-Stützflansches 25 beziehungsweise der Oberseite des Kupplungsarm-Stützflansches 24 ineinander und bilden insgesamt eine Verdrehsicherung 61 zum drehfesten Festlegen des Kupplungsarms 12a an dem Halter 11a. Die Formschlusskonturen 60 umfassen Drehsicherungsvorsprünge 62 am Kupplungsarm-Stützflansch 24 sowie Drehsicherungsaufnahmen 63 am Halter-Stützflansch 25.

Die Drehsicherungsaufnahmen 63 sind vorliegend Kugelkalotten, in die die kugelförmigen Drehsicherungsvorsprünge 62 eingreifen. Die Drehsicherungsvorsprünge 62 sind beispielsweise in die eine Kontaktseite für den Halter-Stützflansch 25 bildende Kontaktseite 33 des Kupplungsarm-Stützflansches 24 eingepresste Kugeln 64.

Die Stützflächen 68, 69 der Stützflansche 24, 25, an denen die Formschlusskonturen 60 angeordnet sind, können flächig aneinander liegen, wenn die Formschlusskonturen 60 ineinander greifen. Ferner können die Formschlusskonturen 60 aber auch einen Abstand zwischen den Stützflächen 68, 69 bewirken. Der Abstand kann beispielsweise wegen Verschleiß und/oder mechanischer Belastung nach und nach kleiner werden. Beispielsweise können die Drehsicherungsaufnahmen 63 tiefer werden. Dennoch ist eine optimale Verdrehsicherung und wechselseitige Abstützung durch die großen wirksamen Stützflächen 68, 69 der Stützflansche 24, 25 vorhanden.

Als Verdrehsicherung können aber auch anders geartete Formschlusskonturen an der Kontaktseite 33 beziehungsweise der dieser gegenüberliegenden, korrespondierenden Kontaktseite 34 des Halter-Stützflansches 25 dienen. Beispielsweise können die beiden Kontaktseiten 33, 34 eine Riffelung mit z.B. sternförmig verlaufenden oder parallel verlaufenden Längsvorsprüngen und Längsnuten aufweisen, die als Drehsicherungsvorsprünge und -aufnahmen ineinandergreifend wirken. Ferner ist es möglich, dass einzelne Nuten und Vorsprünge vorgesehen sind, beispielsweise eine hohlzylindrische Drehsicherungsaufnahme 65 (gestrichelt in Figur 2), in die ein teilzylindrischer, vor die Kontaktseite 34 des Halter-Stützflansches 25 vorstehender Drehsicherungsvorsprung 66 eingreift. Der Drehsicherungsvorsprung 66 und die Drehsicherungsaufnahme 65 erstrecken sich radial von der Steckaufnahme 16 beziehungsweise dem Steckende 15 weg.

Zur optimierten Aufnahme von Drehkräften ist bei den als Kugeln ausgestalteten Drehsicherungsvorsprüngen 62 sowie den korrespondierenden, kalottenförmigen Drehsicherungsaufnahmen 63 vorgesehen, dass sie im Bereich eines vom Steckende 15 beziehungsweise der Steckaufnahme 16 entfernten äußeren Randbereichs 67 der Stützflansche 24, 25 angeordnet sind.

Zur bequemeren Handhabung beziehungsweise Sicherheit der Anhängekupplung 10a tragen die nachfolgend beschriebenen Einrichtungen bei.

So lässt sich beispielsweise ein Schlüssel 70 von einem in dem Drehknebel 49 aufgenommenen Schloss 71 nur dann abziehen, wenn die Verriegelungsanordnung 17a in ihrer Verriegelungsstellung ist. Eine mit dem Schloss 71 zusammenwirkende Kugel 72 befindet sich in der Verriegelungsstellung der Verriegelungsanordnung 17a in einer Aufnahme 73 und blockiert eine Axialbewegung der Drehwelle 47, die für eine Entriegelung der Verriegelungsanordnung 17a erforderlich ist.

Eine Sicherungseinrichtung 80 sichert die Verdrängereinrichtung 28a in ihrer Freigabestellung. Durch Entsichern der Sicherungseinrichtung 80 kann die Verdrängereinrichtung 28a in ihre die Spannelemente 21 nach außen in die Ringnut 31 verspannende Spann- oder Verriegelungsstellung verlagert werden.

Am Kopf 37 der Verdrängereinrichtung 28a ist ein Sperrformstück 81 in einem Verdränger-Bewegungskanal 82 beweglich gelagert. Das Sperrformstück 81 wird durch eine im Bewegungskanal 82 angeordnete Feder nach außen vor den Außenumfang 44 des Kopfes 37 federbelastet. Dann greift es in der in Figur 5 dargestellten Freigabestellung der Verriegelungsanordnung 17a in einen Steckende-Bewegungskanal 84 am Steckende 15 ein, sodass eine Längsbewegung des Verriegelungsbolzens 35 blockiert ist. Wenn nun das Steckende 15 in die Steckaufnahme 16 eingesteckt wird, wirkt eine Betätigungsfläche 86 der beispielsweise abschnittsweise konischen Steckaufnahme 16 auf das Übertragerelement 85, sodass dieses in den Steckende-Bewegungskanal 84 nach innen in das Steckende 15 hineinverdrängt wird und dabei zugleich auf das Sperrformstück 81 wirkt. Wenn dieses nun weit genug zurückverdrängt wird, sodass es nicht mehr in den Bewegungskanal 84 eingreift, kommt der Verriegelungsbolzen 35 frei, sodass ihn die Federanordnung 40 in Richtung seiner Sperrstellung (in der Zeichnung nach oben) verlagern kann. Dann verdrängt der Kopf 37 die Spannelemente 21 nach radial außen in die Ringnut 31 hinein.

Das Übertragerelement 85 und das Sperrformstück 81 sind zumindest an ihren durch Betätigungsflächen betätigbaren beziehungsweise aufeinanderwirkenden Oberflächen kugelig. Das Übertragerelement 85 ist eine Kugel. Die Sicherungseinrichtung 80 hat somit eine Art Kugelauslösung, bei der die Verriegelungsanordnung 17a sozusagen automatisch beim Einstecken des Kupplungsarms 12a in den Halter 11a aus ihrer Freigabestellung in die Spannstellung gelangt, wobei sie den Kupplungsarm 12a am Halter 11a verriegelt.

Aufgrund der kompakten Bauform der Anhängekupplung 10a verläuft der Steckende-Bewegungskanal 84 nahe bei dem Halter-Stützflansch 25, vorliegend knapp oberhalb.

Eine Anhängekupplung 10b hat ebenfalls die oben bereits erläuterten Stützflansche 24, 25, die jedoch an einem Halter 11b und einem Kupplungsarm 12b angeordnet sind. Soweit bei der Anhängekupplung 10b Komponenten gezeigt sind, die ähnlich oder gleichartig wie bei der Anhängekupplung 10a sind, ist jeweils der Kleinbuchstabe "b" zu den jeweiligen Bezugsziffern hinzugefügt.

Eine Verriegelungsanordnung 17b der Anhängekupplung 10b ist mit ihren beweglichen Komponenten im Wesentlichen am Halter 11b angeordnet. Am Kupplungsarm 12b sind keine beweglichen Komponenten der Verriegelungsanordnung 17b angeordnet, sondern lediglich eine Ausnehmungsanordnung 30b. Die Ausnehmungsanordnung 30b enthält am Steckende 15 angeordnete Kalotten 90, in die als Spannelemente 21 dienende Kugeln in ihrer Verriegelungsstellung V bzw. Spannstellung eingreifen. In ihrer Entriegelungsstellung E sind die Spannelemente 21 außer Eingriff mit den Kalotten 90, so dass der Kupplungsarm 12b vom Halter 11b entfernbar ist. Es könnte auch nur ein Spannelement vorgesehen sein. Das mindestens eine Spannelement kann auch ein Wälzkörper, eine Rolle oder ein sonstiges Formstück sein.

Vorteilhaft bewirkt eine Konturgestaltung der Ausnehmungsanordnung 30b, insbesondere der Kalotten 90, eine den Kupplungsarm 12b in Richtung des Halters 11b ziehende Spannkraft.

Zur Betätigung der Spannelemente 21 ist eine Verdrängereinrichtung 28b vorgesehen, die einen Verriegelungsring 92 umfasst. Der Verriegelungsring 92 ist an einer Aufnahmehülse 26b des Halters 11b beweglich, vorliegend schiebebeweglich, gelagert. Der Verriegelungsring 92 kann zwischen einer oberen, der Verriegelungsstellung V entsprechenden Schiebestellung, bei der die Spannelemente 21 in die Kalotten 90 eingreifen, und einer unteren, der Entriegelungsstellung E entsprechenden Stellung verschoben werden. In der Entriegelungsstellung E können die Kugeln oder Spannelemente 21 in eine Freigabeausnehmung 93 im Innenraum des Verriegelungsrings 92 eintreten, wobei die Spannelemente 21 aus den Kalotten 90 herausbewegt sind. Die Führungskanäle 91 durchsetzen eine Seitenwand der Aufnahmehülse 26b.

In seiner Verriegelungsstellung V verdrängt der Verriegelungsring 92 in seiner Funktion als Verdrängereinrichtung 28b die Spannelemente 21 nach radial innen durch die Führungskanäle 91 hindurch in die Ausnehmungsanordnung 30b. Dazu ist im Innern des Verriegelungsrings 92 neben der Freigabeausnehmung 93 eine Verriegelungsschräge 94, insbesondere eine Spannschräge, zum verdrängen der Spannelemente 21 nach radial innen in Richtung der Führungskanäle 91 vorgesehen.

Nun wäre es prinzipiell möglich, den Verriegelungsring 92 manuell zu betätigen, vorteilhaft nur zur Entriegelung, gegebenenfalls aber auch zur Verriegelung. Man könnte beispielsweise einen Betätigungsarm für den Verriegelungsring 92 vorsehen, der unter den Stoßfänger 55 vorragt und von einem Bediener ergriffen werden kann.

Der Verriegelungsring 92 ist zweckmäßigerweise in seine Verriegelungsstellung V durch eine Feder 95 einer Federanordnung federbelastet, so dass die Verrieglungsanordnung 17b selbsttätig verriegelt. Die Feder 95 stützt sich einerseits am Halter-Stützflansch 25 und andererseits am Verriegelungsring 92 ab. Die Feder 95 ist von der Aufnahmehülse 26b durchdrungen.

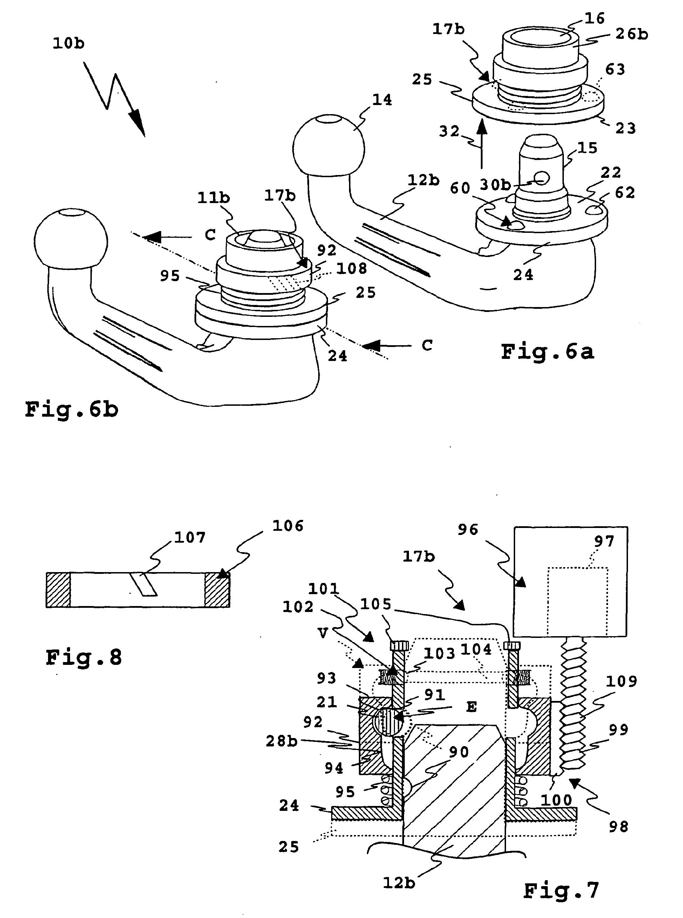

Wesentlich komfortabler ist jedoch ein motorisches Verriegelungskonzept, das anhand von Figur 7 näher erläutert wird. Der Verriegelungsring 92 ist nämlich mit Hilfe eines Verriegelungsantriebs 96 betätigbar. Der Verriegelungsantrieb 96 enthält einen Antriebsmotor 97, beispielsweise einen elektrischen Antriebsmotor (pneumatische oder hydraulische Antriebe sind auch möglich), zum Betätigen eines Spanngetriebes 98. Das Spanngetriebe 98 sorgt für eine Untersetzung der abtriebsseitigen Drehzahl des Antriebsmotors 97, so dass dieser eine hohe Spannkraft auf den Verriegelungsring 92 und auf die Verdrängereinrichtung 28b ausüben kann. Das Spanngetriebe 98 umfasst ein Schneckengetriebe 109 mit einer Schnecke 99, die mit einer Zahnung 100 kämmt. Die Zahnung 100 erstreckt sich beispielsweise am Außenumfang des Verriegelungsrings 92. Die Schnecke 99 bildet eine Abtriebswelle des Antriebsmotors 97 oder ist mit derselben verbunden. Zweckmäßigerweise ist eine Steigung der Schnecke 99 bzw. ein Abstand der Zähne der Zahnung 100 so bemessen, dass eine Selbsthemmung gegeben ist. Somit bleibt die Verriegelungsanordnung 17B nach einer motorischen Betätigung in ihrer jeweiligen Stellung V oder E.

Es versteht sich, dass die Feder 95 bei dem motorischen Antriebskonzept als Unterstützung und/oder zusätzliche Sicherheit zwar zweckmäßig ist, jedoch nicht unbedingt erforderlich. Sie könnte auch weggelassen werden.

Bei Vorhandensein der Feder 95 könnte der Verriegelungsantrieb 96 lediglich einen Entriegelungsantrieb darstellen, das heißt die Verriegelung erfolgt federbelastet, die Entriegelung motorisch.

Nach dem Einstecken des Kupplungsarms 12b in den Halter 11b müsste ein Bediener an sich warten, bis der Verriegelungsantrieb 96 die vorher erläuterte Verriegelung vornimmt. Hier kann Abhilfe geschaffen sein. Die Anhängekupplung 10b weist nämlich optional Haltemittel 101 zum Halten des Kupplungsarms 12b in der Steckaufnahme 16 nach dessen Einstecken zumindest solange, bis der Verriegelungsantrieb 96 den Kupplungsarm 12b verriegelt.

Die Haltemittel 101 umfassen beispielsweise Rastmittel 102 mit Rastkörpern 103, die in eine Rastaufnahme 104 eingreifen. Die Rastmittel 102 haben eine solche Haltekraft, dass bei unverriegelter Verriegelungsanordnung 17b ein Fahrbetrieb der Anhängekupplung 10b mit angehängtem Anhänger A nicht möglich ist. Eine Belastung durch den Anhänger A führt dazu, dass der Kupplungsarm 12b aus der Steckaufnahme 16 herausgezogen wird. Beim Ausführungsbeispiel sind die Rastkörper 103 (es könnte auch nur ein einziger Rastkörper oder auch drei oder mehr Rastkörper vorgesehen sein) beweglich am Halter 11a, beispielsweise an der Außenwand der Aufnahmehülse 26b gelagert. Zudem sind die Rastkörper 103 federbelastet. In der Zeichnung ist eine lediglich schematische Darstellung getroffen. Die Rastkörper 103 können beispielsweise in der Praxis etwas weiter oberhalb angeordnet sein, so dass sie außerhalb eines Bewegungswegs des Verriegelungsrings 92 sind. Ferner könnte am Verriegelungsring 92 die eine oder andere Ausnehmung für die Rastkörper 103 angeordnet sein. Die Rastaufnahme 104 wird beispielsweise durch eine Ringausnehmung am freien Ende des Steckendes 15 gebildet. Es versteht sich, dass alternativ auch Kalotten oder andere Ausnehmungen möglich sind.

Ferner ist es möglich, dass bei einer erfindungsgemäßen Anhängekupplung mindestens ein Rastkörper beweglich und zweckmäßigerweise federbelastet an einem Kupplungsarm angeordnet ist und in eine korrespondierende Rastaufnahme am Halter eingreift (nicht dargestellt).

Alternativ könnten die Haltemittel 101 auch einen Magneten 105 umfassen, beispielsweise einen Ringmagneten, der im Bereich der Steckaufnahme 16 angeordnet ist und den Kupplungsarm 12b bis zu dessen Verriegelung durch den Verriegelungsantrieb 96 hält.

Der Verriegelungsantrieb 96 hat einen verhältnismäßig hohen Platzbedarf, weil er nach oben vor den Halter 11b vorsteht. Es versteht sich, dass auch ein quer zur Steckaufnahme angeordneter Verriegelungsantrieb, z.B. ein bei Gebrauch im Wesentlichen horizontal liegender Verriegelungsantrieb, möglich wäre, der den Verriegelungsring 106 zwischen seiner oberen und unteren Stellung verschiebt. Es könnte auch beispielsweise eine Schrägverzahnung 108 oder eine Horizontalverzahnung vorgesehen sein.

Weiterhin wäre auch eine Drehbewegung eines Verriegelungsrings möglich.

Beispielsweise könnte man anstelle des Verriegelungsrings 92 auch einen in Figur 8 dargestellten Verriegelungsring 106 verwenden, der für eine Drehbetätigung ausgelegt ist. Hierfür ist es vorteilhaft, wenn am Außenumfang des Verriegelungsrings 106 beispielsweise eine Zahnung mit im Wesentlichen vertikal verlaufenden Zähnen angeordnet ist, mit der z.B. die Schnecke 99 kämmen könnte. Im Innenraum des Verriegelungsrings 106 ist z.B. (nicht dargestellt) ein Spanngewinde, eine exzentrische Kontur oder dergleichen, oder eine Spannkulisse 107 zur Betätigung der Spannelemente 21 vorgesehen, die als eine Schrägkulisse ausgestaltet ist. Bei einer Drehbetätigung des Verriegelungsrings 106 verlagert die Spannkulisse 107 oder eine sonstige Spannkontur das ihr jeweils zugeordnete Spannelement 21 nach radial innen oder lässt eine Bewegung nach radial außen zu.

## Patentansprüche

1. Anhängekupplung (10a; 10) für ein Kraftfahrzeug (19), welche einen Kupplungsarm (12a; 12b) aufweist, der an seinem freien Ende ein Kopfstück (14) zum lösbaren Befestigen eines Anhängers (A) trägt und mit einem steckende (15) in einer Einsteck-Längsriehtung (32) in eine Steckaufnahme (16) eines an dem Kraftfahrzeug (19) anordbaren oder angeordneten Halters (11a; 11b) einsteckbar ist, und welche eine Verriegelungsanordnung (17a; 17b) zur Verriegelung des Kupplungsarms (12a; 12b) an dem Halter (11a; 11b) mit mindestens einem Spannelement (21) aufweist, wobei das mindestens eine Spannelement (21) in einer Spannsteilung in eine korrespondierende Ausnehmungsanordnung (30a; 30b) eingreift, so dass ein Kupplungsarm-Anschlag (22) gegen einen Halter-Anschlag (23) gespannt ist, und wobei das mindestens eine Spannelement (21) am Kupplungsarm (12a) und die Ausnehmungsanordnung (30a; 30b) am Halter angeordnet sind oder umgekehrt, **dadurch gekennzeichnet, dass** der Kupplungsarm-Anschlag (22) an einem kragenartig abstehenden, plattenartigen Kupplungsarm-stützflansch (24) und/oder der Halter-Anschlag (23) an einem kragenartig abstehenden, plattenartigen Halter-stützflansch (25) vorgesehen sind, dass zum drehfesten Festlegen des Kupplungsarms (12a; 12b) an dem Halter (11a; 11b) an dem Kupplungsarm-stützflansch (24) oder dem Halter-Stützflansch (25) eine Verdrehsicherung (61) vorgesehen ist, bei der mindestens ein Drehsicherungsvorsprung (62; 66) in mindestens eine Drehsicherungsaufnahme (63; 65) eingreift, und dass der mindestens eine Drehsicherungsvorsprung (62; 66) an einem Stützflansch (24) und die mindestens eine Drehsicherungsaufnahme (63; 65) am anderen Stützflansch (25) angeordnet sind und einen Abstand zwischen stützflächen (68, 69) der Stützflansche (24, 25) bewirken, an denen der mindestens eine Drehsicherungsvorsprung (62; 66) und die mindestens eine Drehsicherungsaufnahme (63; 65) angeordnet sind.

2. Anhängekupplung (10a; 10b) nach Anspruch 1, **dadurch gekennzeichnet, dass** eine Länge der Steckaufnahme (16) kürzer als ein Durchmesser oder eine Seitenlänge des Halter-Stützflanschs (25) ist.

3. Anhängekupplung (10a; 10b) nach Anspruch 1 oder 2, **dadurch gekennzeichnet, dass** ein halber Durchmesser des Halter-Stützflansche (25) etwa dem 0,7 bis 1,5-fachen einer Länge der Steckaufnahme (16) entspricht und/oder dass eine Länge des Steckendes (15) etwa einem 0,7 bis 1,5-fachen Durchmesser des Kupplungsarm-Stützflanschs (24) entspricht.

4. Anhängekupplung (10a; 10b) nach einem der vorhergehenden Ansprüche, **dadurch gekennzeichnet, dass** ein Abstand (75) zwischen dem mindestens einen Spannelement (21) und dem Kupplungsarm-Stützflansch (24) gleich oder kleiner als ein halber Durchmesser des Kupplungsarm-Stützflanschs (24) ist.

5. Anhängekupplung (10a; 10b) nach einem der vorhergehenden Ansprüche, **dadurch gekennzeichnet, dass** das steckende (15) und ein im montierten zustand nach unten vorstehender Kupplungsarmabschnitt (76) des Kupplungsarms (12a; 12b) sich von einander entgegengesetzten Seiten des Kupplungsarm-Stützflanschs (24) weg entlang der Einsteck-Längsrichtung (32) erstrecken, und dass eine Länge des Steckendes (1.5) etwa einem 0,7 bis 1,3-fachen des Kupplungsarmabschnitts (76) entspricht.

6. Anhängekupplung (10a; 10b) nach einem der vorhergehenden Ansprüche, **dadurch gekennzeichnet, dass** eine Krümmung zu einem quer zu der Einsteck-Längsrichtung (32) verlaufenden Halsabschnitt des Kupplungsarms (12a; 12b) unmittelbar an dem kupplungsarm-Stützflansch (24) beginnt.

7. Anhängekupplung (10a; 10b) nach einem der vorhergehenden Ansprüche, **dadurch gekennzeichnet, dass** der Halter-Stützflansch (25) und/oder der Kupplungsarm-Stützflansch (24) eine kreisförmige oder polygone Außenkontur aufweisen oder segmentiert sind.

8. Anhängekupplung (10a; 10b) nach einem der vorhergehenden Ansprüche, **dadurch gekennzeichnet, dass** der Kupplungsarm-Stützflansch (24) und der Halter-Stützflansch (25) in der Spannstellung im wesentlichen flächig aneinander anliegen.

9. Anhängekupplung (10a; 10b) nach einem der vorhergehenden Ansprüche, **dadurch gekennzeichnet, dass** der mindestens eine Drehsicherungsvorsprung (62; 66) zylindrisch oder kugelig ist, und die mindestens eine Drehsicherungsaufnahme (63; 65) hohlzylindrisch oder kalottenförmig ist und/oder dass der mindestens eine Drehsicherungsvorsprung (62; 66) oder die mindestens eine Drehsicherungsaufnahme (63; 65) an einem von dem Steckende (15) beziehungsweise der Steckaufnahme (16) entfernten äußeren Randbereich (67) des jeweiligen Stützflanschs (24, 25) angeordnet sind.

10. Anhängekupplung (10a; 10b) nach einem der vorhergehenden Ansprüche, **dadurch gekennzeichnet, dass** eine Verdrängereinrichtung (28a; 28b) der verriegelungsanordnung (17a; 17b) und das mindestens eine Spannelement (21) beweglich in dem Steckende (15) angeordnet sind, wobei das mindestens eine Spannelement (21) in der Spannstellung vor einen Außenumfang (29) des Steckendes (15) vorsteht und in die in diesem Fall an der Steckaufnahme (16) angeordnete Ausnehmungsanordnung (30a; 30b) eingreift, oder eine Verdrängereinrichtung (28a; 28b) und das mindestens eine Spannelement (21) beweglich an dem Halter (11a; 11b) angeordnet sind, wobei das mindestens eine Spannelement (21) in der Spannstellung in die in diesem Fall am Kupplungsarm (12a; 12b) angeordnete Ausnehmungsanordnung (30a; 30b) eingreift.

11. Anhängekupplung (10a; 10b) nach Anspruch 10, **dadurch gekennzeichnet, dass** die Verdrängereinrichtung (28a; 28b) zum Verdrängen des mindestens einen Spannelementes (21) in die Spannstellung beweglich gelagert ist, wobei die verdrängereinrichtung (28a; 28b) vorzugsweise einen in einem Führungskanal (39) des Steckendes (15) längsverstellbar geführten, vorteilhaft in die Spannstellung federbelasteten, Verriegelungsbolzen (35) und/oder einen am Halter (11a; 11b) beweglich angeordneten Verriegelungsring (92, 106) enthält.

12. Anhängekupplung (10a; 10b) nach einem der Ansprüche 10 oder 11, **dadurch gekennzeichnet, dass** sie eine Sicherungseinrichtung (80) zum Sichern der Verdrängereinrichtung (28a; 28b) der Verriegelungsanordnung (17as 17b) in einer zum Entnehmen des Kupplungsarms (12a; 12b) aus dem Halter (11a; 11b) vorgesehenen Freigabestellung gegen eine Bewegung in die Spannstellung aufweist, dass die Sicherungseinrichtung (80) ein in einem Steckende-Bewegungskanal (84) des Steckendes (15) des Kupplungsarms (12a; 12b) beweglich angeordnetes Übertragerelement (85) und ein in einem Verdränger-Bewegungskanal (82) der Verdrängereinrichtung (28a; 28b) beweglich angeordnetes federbelastetes Sperrformstück (81) aufweist, wobei das Übertragerelement (85) bei einem Einstecken des Steckendes (15) in die Halterung (11a; 11b) durch eine Innenkontur der Steckaufnahme (16) nach innen in das Steckende (15) hinein verdrängt wird und dabei das Sperrformstück (81) in den Verdränger-Bewegungskanal (82) hinein verdrängt, bis das Sperrformstück (B1) eine Bewegung der verdrängezeinrichtung (28a; 28b) in die Spannstellung zulässt, und dass der Steckende-Bewegungskanal (84) unmittelbar neben dem Kupplungsarm-Stützflansch (24) verläuft.

13. Kraftfahrzeug mit einer Anhängekupplung (10a; 10b) nach einem der vorhergehenden Ansprüche.

## Claims

1. Trailer coupling (10a; 10b) for a motor vehicle, comprising a coupling arm (12a; 12b), which supports at its free end a head piece (14) for releasably mounting a trailer (A) and which can be plugged by way of a plug-in end (15) in a longitudinal plug-in direction (32) into a plug-in receptacle (16) of a holder (11a; 11b) which is or can be mounted on the motor vehicle (19), and further comprising a locking arrangement (17a; 17b) for locking the coupling arm (12a; 12b) on the holder (11a; 11b) by means of at least one clamping element (21), wherein the at least one clamping element (21) engages in a clamping position a corresponding recess arrangement (30a; 30b), so that a coupling arm stop (22) is clamped against a holder stop (23), and wherein the at least one clamping element (21) is located on the coupling arm (12a) and the recess arrangement (30a; 30b) is located on the holder or vice versa, **characterised in that** the coupling arm stop (22) is provided on a plate-shaped coupling arm support flange (24) projecting in the manner of a collar and/or the holder stop (23) is provided on a plate-shaped holder support flange (25) projecting in the manner of a collar, **in that**, for the non-rotatable location of the coupling arm (12a; 12b) on the holder (11a; 11b), the coupling arm support flange (24) or the holder support flange (25) is provided with an anti-rotation device (61), wherein at least one anti-rotation projection (62; 66) engages at least one anti-rotation receptacle (63; 65), and **in that** the at least one anti-rotation projection (62; 66) is located on one support flange (24) and the at least one anti-rotation receptacle (63; 65) is located on the other support flange (25), effecting a distance between the support surfaces (68, 69) of the support flanges (24, 25) on which the at least one anti-rotation projection (62; 66) and the at least one anti-rotation receptacle (63; 65) are located.

2. Trailer coupling (10a; 10b) according to claim 1, **characterised in that** a length of the plug-in receptacle (16) is less than a diameter or a side length of the holder support flange (25).

3. Trailer coupling (10a; 10b) according to claim 1 or 2, **characterised in that** half a diameter of the holder support flange (25) corresponds to approximately 0.7 to 1.5 times a length of the plug-in receptacle (16), and/or in that a length of the plug-in end (15) corresponds to approximately 0.7 to 1.5 times a diameter of the coupling support flange (24).

4. Trailer coupling (10a; 10b) according to any of the preceding claims, **characterised in that** a distance between the at least one clamping element (21) and the coupling support flange (24) is equal to or less than half a diameter of the coupling support flange (24).

5. Trailer coupling (10a; 10b) according to any of the preceding claims, **characterised in that** the plug-in end (15) and a coupling arm section (76) of the coupling arm (12a; 12b) which projects downwards in the assembled state extend from opposite sides of the coupling support flange (24) along the longitudinal plug-in direction (32), and **in that** a length of the plug-in end (15) corresponds to approximately 0.7 to 1.3 times the coupling arm section (76).

6. Trailer coupling (10a; 10b) according to any of the preceding claims, **characterised in that** a curvature towards a neck section of the coupling arm (12a; 12b) which extends at right angles to the longitudinal plug-in direction (32) starts immediately at the coupling support flange (24).

7. Trailer coupling (10a; 10b) according to any of the preceding claims, **characterised in that** the holder support flange (25) and/or the coupling support flange (24) has/have a circular or polygonal external contour or is/are segmented.

8. Trailer coupling (10a; 10b) according to any of the preceding claims, **characterised in that** the coupling support flange (24) and the holder support flange (25) are in substantially flat contact with each other in the clamping position.

9. Trailer coupling (10a; 10b) according to any of the preceding claims, **characterised in that** the at least one anti-rotation projection (62; 66) is cylindrical or spherical, and **in that** the at least one anti-rotation receptacle (63; 65) is hollow-cylindrical or hemispherical, and/or **in that** the at least one anti-rotation projection (62; 66) or the at least one anti-rotation receptacle (63; 65) is located in an outer edge region (67) of the respective support flange (24, 25) which is remote from the plug-in end (15) or the plug-in receptacle (16) respectively.

10. Trailer coupling (10a; 10b) according to any of the preceding claims, **characterised in that** a displacement device (28a; 28b) of the locking arrangement (17a; 17b) and the at least one clamping element (21) are movably located in the plug-in end (15), wherein the at least one clamping element (21) projects in front of an outer circumference (29) of the plug-in end (15) in the clamping position and engages the recess arrangement (30a; 30b), which is in this case located on the plug-in receptacle (16), or **in that** a displacement device (28a; 28b) and the at least one clamping element (21) are movably mounted on the holder (11a; 11 b), wherein the at least one clamping element (21) engages in the clamping position the recess arrangement (30a; 30b), which is in this case located on the coupling arm (12a; 12b).

11. Trailer coupling (10a; 10b) according to claim 10, **characterised in that** the displacement device (28a; 28b) is movably mounted for displacing the at least one clamping element (21) into the clamping position, wherein the displacement device (28a; 28b) preferably includes a locking pin (35) which is guided for longitudinal movement in a guide channel (39) of the plug-in end (15) and which is advantageously spring-loaded towards the clamping position, and/or a locking ring (92, 106) which is movable mounted on the holder (11 a; 11 b).

12. Trailer coupling (10a; 10b) according to claim 10 or 11, **characterised in that** it comprises a securing device (80) for securing the displacement device (28a; 28b) of the locking arrangement (17a; 17b) in a release position provided for removing the coupling arm (12a; 12b) from the holder (11 a; 11 b) against a movement into the clamping position, **in that** the securing device (80) comprises a transmission element (85), which is movably installed into a plug-in end movement channel (84) of the plug-in end (15) of the coupling arm (12a; 12b), and a spring-loaded locking moulding (81), which is movably installed into a displacement device movement channel (82) of the displacement device (28a; 28b), wherein the transmission element (85) is displaced inwards into the plug-in end (15) by an internal contour of the plug-in receptacle (16) while the plug-in end (15) is inserted into the holder (11a; 11b), thereby displacing the locking moulding (81) into the displacement device movement channel (82) until the locking moulding (81) allows a movement of the displacement device (28a; 28b) into the clamping position, and **in that** the plug-in end movement channel (84) extends directly adjacent to the coupling arm support flange (24).

13. Motor vehicle with a trailer coupling (10a; 10b) according to any of the preceding claims.

## Revendications

1. Attelage de remorque (10a ; 10b) pour un véhicule automobile (19) qui présente un bras d'attelage (12a ; 12b) portant sur son extrémité libre une pièce de tête (14) pour la fixation amovible d'une remorque (A) et pouvant être emboîté avec une extrémité à emboîter (15) dans un sens longitudinal d'emboîtement (32) dans un logement à emboîtement (16) d'un support (11 a ; 11 b) disposé ou pouvant être disposé sur le véhicule automobile (19), et qui présente un ensemble de verrouillage (17a ; 17b) pour le verrouillage du bras d'attelage (12a ; 12b) sur le support (11 a ; 11 b) avec au moins un élément de serrage (21), sachant qu'au moins un élément de serrage (21) s'engage dans une position de serrage dans un ensemble d'évidement correspondant (30a ; 30b) de sorte qu'une butée de bras d'attelage (22) soit serrée contre une butée de support (23), et sachant qu'au moins un élément de serrage (21) est disposé sur le bras d'attelage (12a) et l'ensemble d'évidement (30a ; 30b) est disposé sur le support ou inversement, **caractérisé en ce que** la butée de bras d'attelage (22) est prévue sur une bride d'appui de bras d'attelage (24) de type plaque, dépassant comme un collet et/ou la butée de support (23) est prévue sur une bride d'appui de support (25) de type plaque, dépassant comme un collet, **en ce qu'**un blocage en rotation (61) est prévu pour la fixation solidaire en rotation du bras d'attelage (12a ; 12b) sur le support (11 a ; 11 b) sur la bride d'appui de bras d'attelage (24) ou sur la bride d'appui de support (25), pour lequel blocage au moins une saillie de blocage en rotation (62 ; 66) s'engage dans au moins un logement de blocage en rotation (63 ; 65), et **en ce qu'**au moins une saillie de blocage en rotation (62 ; 66) est disposée sur une bride d'appui (24) et au moins un logement de blocage en rotation (63 ; 65) est disposé sur l'autre bride d'appui (25) et provoquent un écartement entre des surfaces d'appui (68, 69) des brides d'appui (24, 25), sur lesquelles sont disposés au moins une saillie de blocage en rotation (62 ; 66) et au moins un logement de blocage en rotation (63 ; 65).

2. Attelage de remorque (10a ; 10b) selon la revendication 1, **caractérisé en ce qu'**une longueur du logement à emboîtement (16) est plus courte qu'un diamètre ou une longueur latérale de la bride d'appui de support (25).

3. Attelage de remorque (10a ; 10b) selon la revendication 1 ou 2, **caractérisé en ce qu'**un demi-diamètre de la bride d'appui de support (25) correspond à peu près à 0,7 à 1,5 fois une longueur du logement à emboîtement (16) et/ou **en ce qu'**une longueur de l'extrémité à emboîter (15) correspond à peu près à 0,7 à 1,5 fois le diamètre de la bride d'appui de bras d'attelage (24).

4. Attelage de remorque (10a; 10b) selon l'une quelconque des revendications précédentes, **caractérisé en ce qu'**une distance (75) entre au moins un élément de serrage (21) et la bride d'appui de bras d'attelage (24) est identique ou plus petite qu'un demi-diamètre de la bride d'appui de bras d'attelage (24).

5. Attelage de remorque (10a ; 10b) selon l'une quelconque des revendications précédentes, **caractérisé en ce que** l'extrémité à emboîter (15) et une section de bras d'attelage (76) dépassant vers le bas à l'état monté du bras d'attelage (12a ; 12b) s'éloignent des côtés opposés de la bride d'appui du bras d'attelage (24) le long du sens longitudinal d'emboîtement (32), et **en ce qu'**une longueur de l'extrémité à emboîter (15) correspond à peu près à 0,7 à 1,3 fois la section de bras d'attelage (76).

6. Attelage de remorque (10a ; 10b) selon l'une quelconque des revendications précédentes, **caractérisé en ce qu'**une courbure vers une section de col du bras d'attelage (12a; 12b) s'étendant transversalement au sens longitudinal d'emboîtement (32) commence directement sur la bride d'appui du bras d'attelage (24).

7. Attelage de remorque (10a; 10b) selon l'une quelconque des revendications précédentes, **caractérisé en ce que** la bride d'appui de support (25) et/ou la bride d'appui de bras d'attelage (24) présentent un contour extérieur circulaire ou polygonal ou sont segmentées.

8. Attelage de remorque (10a; 10b) selon l'une quelconque des revendications précédentes, **caractérisé en ce que** la bride d'appui de bras d'attelage (24) et la bride d'appui de support (25) reposent l'une sur l'autre sensiblement à plat dans la position de serrage.

9. Attelage de remorque (10a; 10b) selon l'une quelconque des revendications précédentes, **caractérisé en ce qu'**au moins une saillie de blocage en rotation (62 ; 66) est cylindrique ou sphérique et au moins un logement de blocage en rotation (63 ; 65) est cylindrique et creux ou en forme de calotte et/ou **en ce qu'**au moins une saillie de blocage en rotation (62 ; 66) ou au moins un logement de blocage en rotation (63 ; 65) est disposé sur une zone de bord (67) extérieure éloignée de l'extrémité à emboîter (15) ou du logement à emboîtement (16) de la bride d'appui respective (24, 25).

10. Attelage de remorque (10a; 10b) selon l'une quelconque des revendications précédentes, **caractérisé en ce qu'**un dispositif de refoulement (28a ; 28b) de l'ensemble de verrouillage (17a ; 17b) et au moins un élément de serrage (21) sont disposés de manière mobile dans l'extrémité à emboîter (15), sachant qu'au moins un élément de serrage (21) dépasse dans la position de serrage d'une périphérie extérieure (29) de l'extrémité à emboîter (15) et s'engage dans l'ensemble d'évidement (30a ; 30b) disposé dans ce cas sur le logement à emboîtement (16), ou un dispositif de refoulement (28a ; 28b) et au moins un élément de serrage (21) sont disposés de manière mobile sur le support (11 a ; 11b), sachant qu'au moins un élément de serrage (21) s'engage dans la position de serrage dans l'ensemble d'évidement (30a ; 30b) disposés dans ce cas sur le bras d'attelage (12a ; 12b).

11. Attelage de remorque (10a; 10b) selon la revendication 10, **caractérisé en ce que** le dispositif de refoulement (28a ; 28b) est logé de manière mobile pour le refoulement d'au moins un élément de serrage (21) dans la position de serrage, sachant que le dispositif de refoulement (28a ; 28b) contient de préférence un boulon de verrouillage (35) guidé de manière réglable longitudinalement dans un canal de guidage (39) de l'extrémité à emboîter (15), sollicité par ressort avantageusement dans la position de serrage et/ou un anneau de verrouillage (92, 106) disposé de manière mobile sur le support (11 a ; 11 b).

12. Attelage de remorque (10a; 10b) selon l'une quelconque des revendications 10 ou 11, **caractérisé en ce qu'**il présente un dispositif de blocage (80) pour le blocage du dispositif de refoulement (28a ; 28b) de l'ensemble de verrouillage (17a ; 17b) dans une position de libération prévue pour le retrait du bras d'attelage (12a, 12b) du support (11 a ; 11 b) contre un mouvement dans la position de serrage, **en ce que** le dispositif de blocage (80) présente un élément de transmission (85) disposé de manière mobile dans un canal de mouvement (84) de l'extrémité à emboîter (15) du bras d'attelage (12a ; 12b) et une pièce façonnée de blocage (81) sollicitée par ressort, disposée de manière mobile dans un canal de mouvement de refoulement (82) du dispositif de refoulement (28a ; 28b), sachant que l'élément de transmission (85) est refoulé lors d'un emboîtement de l'extrémité à emboîter (15) dans le support (11 a ; 11 b) par un contour intérieur du logement à emboîtement (16) vers l'intérieur dans l'extrémité à emboîter (15) et refoule la pièce façonnée de blocage (81) dans le canal de mouvement de refoulement (82) jusqu'à ce que la pièce façonnée de blocage (81) autorise un mouvement du dispositif de refoulement (28a ; 28b) dans la position de serrage, et **en ce que** le canal de mouvement d'extrémité à emboîter (84) s'étend directement à côté de la bride d'appui de bras d'attelage (24).

13. Véhicule automobile avec un attelage de remorque (10a ; 10b) selon l'une quelconque des revendications précédentes.
